# EUROPÄISCHE PATENTSCHRIFT

(11) **EP 0 848 437 B1**
(45) Veröffentlichungstag und Bekanntmachung des Hinweises auf die Patenterteilung: **04.10.2001**
(21) Anmeldenummer: 97118897.4
(22) Anmeldetag: 30.10.1997
(51) Int. Cl.: H01M 2/28

(54) **Verfahren zum Angiessen von Polbrücken an die Plattenfahnen von Elektrodenplatten für Bleiakkumulatoren**
Method of casting connector straps onto electrode plate lugs of lead acid accumulators
Procédé de moulage de barrettes de connexion aux cosses de plaques d'électrodes d'accumulateurs au plomb

(30) Priorität: 14.12.1996 DE 19652175
(43) Veröffentlichungstag der Anmeldung: 17.06.1998
(73) Patentinhaber: VB Autobatterie GmbH, 30419 Hannover (DE)
(72) Erfinder: Salamon, Klaus, Dr., 60598 Frankfurt (DE); Tönnessen, Albert, Dr., 65510 Idstein (DE)
(74) Vertreter: Kaiser, Dieter Ralf, Dipl.-Ing.

(56) Entgegenhaltungen:
- US-A- 3 915 218
- PATENT ABSTRACTS OF JAPAN vol. 018, no. 586 (E-1627), 9.November 1994 -& JP 06 223810 A (YUASA CORP), 12.August 1994,
- PATENT ABSTRACTS OF JAPAN vol. 018, no. 158 (E-1525), 16.März 1994 -& JP 05 335009 A (SHIN KOBE ELECTRIC MACH CO LTD), 17.Dezember 1993,

## Beschreibung

Gegenstand der Erfindung ist ein Verfahren zum Angießen von Polbrücken an die Plattenfahnen von Elektrodenplatten für Bleiakkumulatoren, bei dem die Plattenfahnen in eine der Polbrückenform entsprechende Gießform eingetaucht und mit Blei umgossen werden.

In der Technik der Herstellung von Bleiakkumulatoren, insbesondere von Starterbatterien, ist es üblich, die Fahnen aller negativen und die Fahnen aller positiven Elektroden eines Plattensatzes sowie die Endpole durch Angießen der Endpole bzw. Polbrücken miteinander zu verbinden. Dazu wird der Plattensatz über Kopf gehaltert und mit den nach unten hängenden Fahnen in mit schmelzflüssigem Blei gefüllte Gießformen eingetaucht. Die Fahnen werden dabei zuerst angeschmolzen und nach dem Erstarren des Forminhalts und der angeschmolzenen Fahnenanteile fest mit den so entstandenen Polbrücken und Polen verbunden.

Das Erstarren des Bleis wird entweder durch Eintauchen beweglicher Formen in ein Kühlmediun erreicht oder durch Zwangskühlung von festen Formblöcken mit Hilfe von Kühlleitungen und Kühlmedien wie Öl oder Wasser.

Um eine einwandfreie Einbindung der Plattenfahnen in die Polbrücken zu erzielen, ist es üblicher Stand der Technik, die Fahnen der Platten zu bürsten oder zu fräsen, um verschmutzte Oberflächen mechanisch zu reinigen. Es ist ebenfalls bekannt und üblich, Flußmittel auf die Fahnenseitenflächen aufzubringen und die Plattenfahnen anschließend gegebenenfalls zu erhitzen, wie dies in der DE-AS 1159052 beschrieben ist.

Eine verbesserte Einbindung der Plattenfahnen in das Polbrückenmaterial kann gemäß der DE-AS 2050958 durch einen zusätzlichen Verfahrensschritt erreicht werden, in dem die Fahnen vor dem eigentlichen Angußprozeß in ein Schmelzbad aus einer Bleilegierung oder in ein Lötbad getaucht werden, um die Oberflächen mit einer Schicht zu überziehen, die z.B. aus Lötzinn besteht. Dabei werden die Fahnen auch gleichzeitig vorgewärmt.

Aus der JP-A-06223810 ist ein Verfahren zu entnehmen, gemäß dem die Plattenfahnen in einem Blei-Bad auf gleiche Länge abgeschmolzen werden.

Der Erfindung liegt die Aufgabe zugrunde, die bekannten Verfahren der Anbringung von Polbrücken weiter zu verbessern und insbesondere die Gleichmäßigkeit der hergestellten Polbrücke und die Qualität der Fahnenanbindung in der Polbrücke weiter zu verbessern.

Diese Aufgabe wird bei dem Verfahren der eingangs genannten Art erfindungsgemäß durch die Merkmale des Anspruchs 1 gelöst, in den Unteransprüchen sind vorteilhafte Ausgestaltungen des erfindungsgemäßen Verfahrens beschrieben.

Beim erfindungsgemäßen Verfahren wird vor dem eigentlichen Umgießen der Plattenfahnen mit flüssigem Blei zur Bildung der Polbrücke der Plattensatz mit den Plattenfahnen in einem vorgeschalteten Tauchprozeß behandelt, bei dem alle Plattenfahnen in einer Aluminiumschmelze hoher Temperatur auf die gleiche Höhe abgeschmolzen werden.

Durch Fertigungstoleranzen bei der Plattenherstellung besitzen die Elektrodenplatten mit Plattenfahne verschiedene Höhen. Da die Ausrichtung der Elektrodenplatten zu einem Plattenblock durch Ausrichtung an deren Unterkante erfolgt, ergibt sich, daß die Fahnen der Elektrodenplatten vor dem Angießen der Polbrücken im Cast-on-strap-Verfahren stets eine ungleichmäßige Höhe besitzen. Diese Ungleichmäßigkeiten können Größenordnungen von 0,5 - 2 mm erreichen. Durch diese Abweichungen kommt es zu Schwankungen in der Qualität der Fahnenanbindung, da die Wärmebilanz beim Angießen des Bleimaterials der Polbrücken gestört ist. Auch bei optimaler Vorbehandlung der Elektrodenfahnen, z.B. durch Fräsen oder Bürsten, Tauchen in ein Flußmittelbad mit Trocknung oder Vorwärmung hängt bei sonst gleichen Prozeßparametern, wie Schmelzbadtemperatur, Formentemperatur und Kühlzeit, die Qualität der Anbindung der Plattenfahnen in der Polbrücke für jede einzelne Fahne von deren Eintauchtiefe in das Bleibad ab. Auch wenn die mittlere Tauchtiefe der Plattenfahnen eines Plattensatzes optimal eingestellt ist, kann eine zu große Schwankung der tatsächlichen Eintauchtiefen der Einzelfahnen zu deutlichen Schwankungen der Anbindungsgüte der Einzelfahnen führen.

In Metallschmelzbädern wie beispielsweise Blei oder Zinn oder Bleilegierungen ist allerdings das Fahnenmaterial, nämlich eine Bleilegierung, leicht löslich, so daß im Verlauf des Prozesses die Zusammensetzung des Tauchbades verändert wird. Ein weiterer Nachteil dieser Materialien als Tauchbad ist die hohe Oxidationsneigung bei hohen Temperaturen und die Krätzebildung auf der Oberfläche des Bades.

Das erfindungsgemäße Tauchbadmaterial ist daher Aluminium oder eine Aluminiumlegierung. Diese Materialien besitzen eine hohe Oxidationsbeständigkeit, und Blei kann im Aluminiumbad nicht gelöst werden. Bei einer Badtemperatur von ca. 700°C bzw. etwa 660°C bei Reinaluminium, etwa 580°C für AlSi12- Legierung läuft die gewünschte Abschmelzung der Fahnen auf gleiche Länge in kurzer Zeit ab, so daß das Verfahren ohne besondere Schwierigkeiten in den bestehenden Fertigungsablauf eingebracht werden kann. Das abgeschmolzene Fahnenmaterial kann wegen der unterschiedlichen Dichte zum Boden der Aluminiumschmelze absinken, so daß die Oberfläche des Bades immer blank und definiert bleibt.

Neben Aluminium und dessen Legierungen sind auch alle anderen Materialien geeignet, die ein rasches Abschmelzen bewirken ohne auch die Seitenflächen der Plattenfahne zu benetzen und dadurch die spätere Anbindung zu stören. Das dem Bad durch das Abschmelzen zugeführte Fahnenmaterial kann dem Tauchbad gegebenenfalls kontinuierlich entnommen werden, so daß der Badspiegel immer konstant bleibt. Zweckmäßig ist es selbstverständlich, die Badoberfläche möglichst gering zu halten, um Oxidation des Bades zu vermeiden. Die Oberfläche des Bades, in dem Blei sich im unteren Bereich ansammelt, kann durch eine Niveauregelung in konstanter Höhe gehalten werden, indem beispielsweise Blei aus dem Bodenbereich des Behälters über ein Ventil entnommen wird, oder indem ein entsprechender Überlauf vorgesehen wird. Zur Niveauregelung kann gegebenenfalls auch über einen Detektor die jeweilige Höhe der Aluminlum/Bleigrenzfläche benutzt werden.

Grundsätzlich ist es auch möglich, die Plattenfahnenspitzen dadurch abzuschmelzen, daß sie in die Nähe der Oberfläche des Schmelzbades gebracht werden und in diesem Schmelzbad eine Welle erzeugt wird, wobei die Höhe der Welle geregelt wird und diese Welle die Enden der Plattenfahnen auf gleiche Höhe abschmilzt. Derartige Lötbäder mit Wellen sind beispielsweise bei der Herstellung von Platinen bzw. dem Einlöten von Bauelementen in diese Platinen in der Elektronik bekannt.

Dem erfindungsgemäßen Verfahrensschritt kann eine Behandlung der Plattenfahnen mit einem Flußmittel vorgeschaltet oder nachgeschaltet sein. Vorzugsweise wird zuerst ein Flußmittel auf die Plattenfahnen angebracht, dann werden die Plattenfahnen erfindungsgemäß auf gleiche Höhe abgeschmolzen. Durch diesen Vorgang erfolgt gleichzeitig eine Vorwärmung der Plattenfahnen, und danach wird an die Plattenfahnen die Polbrücke angegossen. Durch diese Vorbehandlung wird die Porosität in der Brücke minimiert, und es wird eine Absenkung der Temperatur des flüssigen Bleis in der Polbrückenform ermöglicht. Grundsätzlich ist es auch möglich, nach dem Abschmelzen der Plattenfahnen auf gleiche Höhe, einen zusätzlichen Verfahrensschritt derart vorzunehmen, daß die Fahnen vor dem eigentlichen Angußprozeß in ein Schmelzbad aus einer Bleilegierung oder ein Lötbad getaucht werden, um die Oberflächen mit einer das Angießen erleichternden Schicht, z.B. aus Lötzinn, zu versehen.

## Patentansprüche

1. Verfahren zum Angießen von Polbrücken an die Plattenfahnen von Elektrodenplatten für Bleiakkumulatoren durch Eintauchen der Plattenfahnen in eine Polbrückenform und Umgießen der Plattenfahnen mit flüssigem Blei, bei dem die Plattenfahnen vor dem Angießen der Polbrücken durch Eintauchen in ein Schmelzbad auf gleiche Länge abgeschmolzen werden, **dadurch gekennzeichnet, daß** das Tauchbad eine Aluminiumschmelze enthält.

2. Verfahren nach Ansprüchen 1, **dadurch gekennzeichnet, daß** die Temperatur der Aluminiumschmelze bei 660°C bis 1000°C, vorzugsweise bei 700°C, liegt.

3. Verfahren nach Anspruch 1 oder 2, **dadurch gekennzeichnet, daß** das abgeschmolzene Fahnenmaterial aus dem Schmelzbad kontinuierlich entfernt wird und der Badspiegel konstant gehalten wird.

## Claims

1. Method for casting terminal links onto the plate lugs of electrode plates for lead-acid rechargeable batteries by immersing the plate lugs in a terminal link mould and coating the plate lugs with liquid lead, in which process the plate lugs are melted to the same length by immersion in a melt bath before the terminal links are cast on, **characterized in that** the immersion bath contains an aluminium melt.

2. Method according to Claim 1, **characterized in that** the temperature of the aluminium melt is 660°C to 1000°C, preferably approximately 700°C.

3. Method according to Claim 1 or 2, **characterized in that** the molten lug material is removed continuously from the melt bath, and the bath level is kept constant.

## Revendications

1. Procédé de moulage de barrettes de connexion aux cosses de plaques d'électrodes d'accumulateurs au plomb, par plongée des cosses dans le moule des barrettes et coulée autour de plomb fondu, ces cosses ayant été, avant cette coulée, fondues à la même longueur par plongée dans un bain de fusion,
**caractérisé en ce que**
le bain de plongée est de l'aluminium fondu.

2. Procédé selon la revendication 1,
**caractérisé en ce que**
la température de l'aluminium fondu est comprise entre 660°C et 1000°C, de préférence 700°C.

3. Procédé selon la revendication 1 ou 2,
**caractérisé en ce que**
le matériau fondu des cosses est évacué en continu du bain de fusion, dont le niveau est maintenu constant.
